# EUROPÄISCHE PATENTSCHRIFT

(11) **EP 1 517 130 B1**
(45) Veröffentlichungstag und Bekanntmachung des Hinweises auf die Patenterteilung: **19.08.2015**
(21) Anmeldenummer: 04104197.1
(22) Anmeldetag: 02.09.2004
(51) Int. Cl.: G01N 15/08

(54) **Messung der Permeabilität eines umlaufenden Bandes**
Measurement of the permeability of a circulating belt
Mesure de la perméabilité d'une bande défilant en continu

(30) Priorität: 19.09.2003 DE 10343417
(43) Veröffentlichungstag der Anmeldung: 23.03.2005
(73) Patentinhaber: Voith Patent GmbH, 89522 Heidenheim (DE)
(72) Erfinder: ULFERT, Wolfgang, 88069, TETTNANG (DE); PFIFFERLING, Ralf, 89547, GERSTETTEN (DE); ISCHDONAT, Thomas, 89429, BACHHAGEL (DE); MUENCH, Rudolf, 89551, Koenigsbronn (DE); SOLLINGER, Michael, 70184, Stuttgart (DE)

(56) Entgegenhaltungen:
- DE-A- 19 917 553
- US-A- 4 880 499
- US-A- 4 991 425
- US-A- 5 725 737

## Beschreibung

Die Erfindung betrifft ein Verfahren zur Messung der Permeabilität eines umlaufenden Bandes, insbesondere eines Entwässerungsbandes in einer Papiermaschine, mit einer Düse, aus der ein Messfluid auf das Band strömt.

Permeabilitätsmessungen an umlaufenden Bändern müssen in der Regel mit einem hohen Druck des Messfluids durchgeführt werden, damit der Strom des Messfluids das Band durchdringen kann. Deshalb ist es erforderlich, die Düse entsprechend stark gegen das Band zu pressen, da der Volumenstrom des Messfluids eine entsprechend hohe Reaktionskraft auf die Düse erzeugt, und somit die Düse vom Band weg drückt. Insbesondere dann, wenn Druckschwankungen im Volumenstrom des Messfluids auftreten, besteht die Gefahr, dass die Düse von der auf sie wirkenden Reaktionskraft vom Band abgehoben wird, woraus eine fehlerhafte Permeabilitätsmessung resultieren kann.

Eine derartige Vorrichtung wird z.B. in der US 4,880,499 beschrieben.

Die Erfindung hat deshalb die Aufgabe ein Verfahren der eingangs genannten Art dahingehend zu verbessern, dass ein Abheben der Düse vom Band bei Druckspitzen infolge von Druckschwankungen im Messfluid vermieden wird.

Die Erfindung löst die gestellte Aufgabe durch die Verwendung einer Vorrichtung, bei der erfindungsgemäß die Düse mit einem konstanten Anpressdruck auf das umlaufende Band anpressbar ist. Folglich können Druckschwankungen im Messfluid durch den stets konstanten Anpressdruck der Düse gegen das umlaufende Band die Messgenauigkeit der Vorrichtung nicht mehr beeinflussen. Dies ist im weiteren Sinne auch eine Voraussetzung dafür, dass mehrere Messungen miteinander vergleichbar werden, insbesondere auch im Hinblick auf verschiedene Bespannungen und verschiedene Anlagen.

Der erforderliche Anpressdruck steigt mit dem zunehmenden Austrittsdruck des Messfluids aus der Düse, mit der Bandgeschwindigkeit und mit der Bandspannung. Deshalb ist es zweckmäßig, wenn der Anpressdruck in Abhängigkeit vom Austrittsdruck des Messfluids aus der Düse und/oder von der Bandgeschwindigkeit und/oder von der Bandspannung einstellbar ist. Sinnvollerweise entspricht der Anpressdruck mindestens dem Düsenaustrittsdruck, um eine störungsfreie und genaue Messergebnisse liefernde Permeabilitätsmessung durchführen zu können.

In der Vorrichtung ist die Düse in einem Messkopf integriert. Dieser Messkopf gewährleistet eine definierte Fläche, mit der das Band während der Messung in Berührung ist. Er gewährleistet außerdem, dass die Düse immer in gleicher Weise auf den Filz aufgesetzt wird. Damit der Volumenstrom das Band am besten durchdringen kann, ist es sinnvoll, wenn die Düse während der Messung senkrecht zum Band positioniert ist. Mit dem Messkopf können Einrichtungen zur Messung der Bandgeschwindigkeit, der Düsenaustrittsgeschwindigkeit und des Düsenaustrittsdruckes verbunden sein.

Um eine optimale Anpressung der Düse während der Messung gegen das Band sicherstellen zu können, kann der Messkopf mit einem bestimmten Anpressdruck gegen das Band angepresst werden und/oder die Düse innerhalb des Messkopfes unabhängig vom Anpressdruck des Messkopfes zusätzlich gegen das Band angepresst werden. Die Auftrittsöffnung der Düse weist dabei eine definierte Fläche auf. Die Düse ist bevorzugt derart gestaltet, dass mögliche Leckageverlust möglichst gering sind.

In einer bestimmten Ausführungsform kann der Messkopf eine auf dem Band anpressbare Kontaktfläche aufweisen. Auf diese Weise wird die oben beschriebene definierte Fläche während der Messung sichergestellt.

In einer alternativen Ausführungsform ist es jedoch auch möglich, dass der Messkopf als ein Rahmen ausgebildet ist. Auch diese Konstruktion grenzt für die Messung die definierte Messfläche ab.

Um während der Messung die Reibungsverhältnisse zwischen dem Messkopf und dem umlaufenden Band möglichst gering zu halten, kann der Rahmen mit Gleitschienen und/oder Rollen versehen sein.

Wenn der Messkopf aus einem abriebfesten Material, insbesondere aus einem Keramikwerkstoff, gefertigt ist, weist dieser besonders hohe Standzeiten auf.

Abhängig von der Größe der Düse kann die zur Erzeugung des Anpressdruckes erforderliche Anpresskraft mit einem bestimmten Sicherheitsfaktor versehen werden. Dieser Sicherheitsfaktor für die Anpresskraft kann in einem Intervall von 1 bis 20 liegen.

Eine besonders gute Anpressung der Düse gegen das Band wird erzielt, wenn der Anpressdruck des Messkopfes gegen das Band im Bereich von 200 bis 1.500 N/m² liegt. Berücksichtigt man eine möglichst geringe Reibung bei einer möglichst hohen Bandgeschwindigkeit, so werden insbesondere bei einem Anpressdruck im Bereich von 400 bis 800 N/m² gute Messergebnisse erzielt. Im allgemeinen ist der Anpressdruck der Düse >> als der Anpressdruck des Messkopfes.

Nachfolgend wird ein Ausführungsbeispiel der Verwendeten Vorrichtung anhand der beiliegenden Zeichnungen näher erläutert.

Im Einzelnen zeigen:
- Figur 1: eine Seitenansicht mit einem teilweisen Schnitt auf einen Messkopf mit Düse;
- Figur 2: eine Draufsicht auf eine erste Ausführungsform eines Messkopfes;
- Figur 3: eine Seitenansicht auf den Messkopf aus Figur 1;
- Figur 4: eine Draufsicht auf eine weitere Ausführungsform eines Messkopfes;
- Figur 5: eine Seitenansicht auf den Messkopf aus Figur 4.

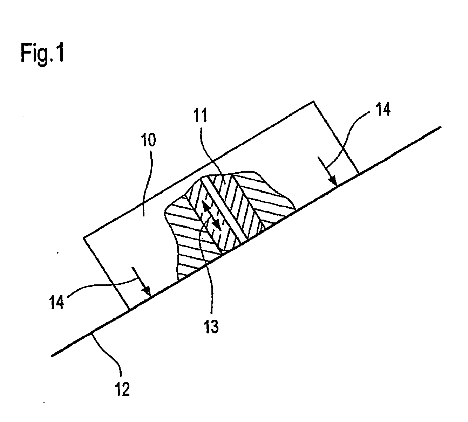

Die Figur 1 zeigt einen Messkopf 10, in dem eine Düse 11 mit einem vorzugsweisen Düsenöffnungsdurchmesser von 1 mm und mit einem vorzugsweisen Düsenaußendurchmesser von 10 mm angeordnet ist. Unter dem Messkopf 10 läuft ein umlaufendes Band 12, das ein Entwässerungsband einer Papiermaschine ist, durch. Mit dem Messkopf 10 und der Düse 11 soll eine Permeabilitätsmessung des Bandes 12 durchgeführt werden. Zu diesem Zweck wird aus der Düse 11 ein mit einem hohen Druck versehener Volumenstrom eines Messfluids durch das Band 12 gepresst. Aufgrund des hohen Düsenaustrittsdruckes des Messfluids, der hohen Bandgeschwindigkeit des Bandes 12 und der hohen Spannung des Bandes muss die Düse 11 mit einem möglichst hohen Anpressdruck gegen das Band 12 gedrückt werden. Um einen maximalen Anpressdruck der Düse 11 gegen das Band 12 sicherzustellen, wird die Düse 11 mit einem durch den Pfeil 13 dargestellten Anpressdruck gegen das Band 12 gedrückt. Dieser Anpressdruck ist unter anderem abhängig von der Düsenform und von der Bandoberfläche. Unabhängig vom Anpressdruck 13 der Düse 11 wird der Messkopf 10 zusätzlich durch einen mit den Pfeilen 14 dargestellten Anpressdruck gegen das Band 12 gedrückt. Dieser Anpressdruck liegt vorzugsweise in einem Bereich von 200 bis 1.500 N/m². Auf diese Weise kann ein maximaler Anpressdruck der Düse 11 und des Messkopfes 10 gegen das Band 12 gewährleistet werden. Da die Düse 11 für ein optimales Messergebnis senkrecht auf dem Band 12 angeordnet werden sollte, ist es wichtig, dass der Messkopf 10 stark gegen das Band 12 gedrückt wird. Somit ist sichergestellt, dass die Düse 11 immer senkrecht auf das Band 12 aufgesetzt wird.

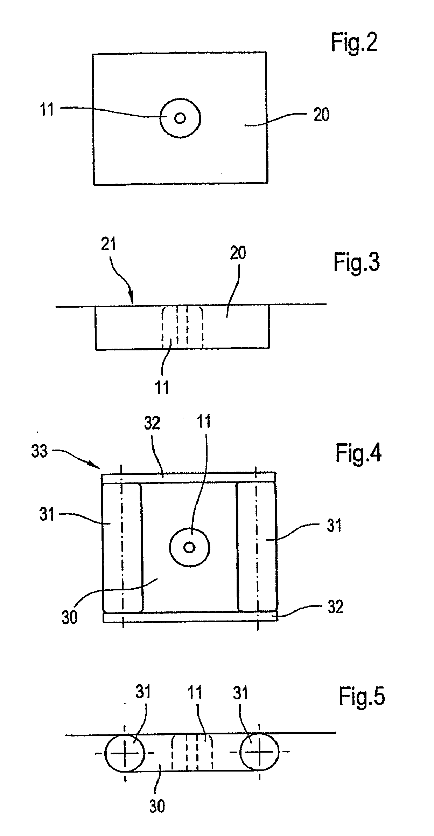

Die Figur 2 zeigt einen Messkopf 20, in dem eine Düse 11 angeordnet ist. Der Messkopf 20 weist eine ebene Kontaktfläche 21 auf. Während des Messvorganges wird der Messkopf 20 mit der ebenen Kontaktfläche 21 auf das Band 12 aufgesetzt. Die ebene Kontaktfläche 21 stellt sicher, dass während des Messvorganges die Düse 11 immer senkrecht zum Band 12 positioniert ist. Außerdem bildet die ebene Kontaktfläche 21 eine definierte Messfläche für den Messvorgang.

Die Figuren 4 und 5 zeigen einen Messkopf 30, der mit Rollen 31 und der Düse 11 versehen ist. Die Rollen 31 sind durch Verbindungselemente 32 miteinander verbunden. Die Rollen 31 und die Verbindungselemente 32 bilden somit einen Rahmen 33. Der Rahmen 33 bildet für den Messvorgang eine definierte Messfläche. Er stellt außerdem sicher, dass die Düse 11 immer senkrecht gegen das Band 12 gepresst wird. Während des Messvorganges sind die Rollen 31 auf das Band 12 aufgesetzt. Dadurch wird eine geringe Reibung zwischen dem Messkopf 30 und dem Band 12 sichergestellt. Abhängig vom Düsenaustrittsdruck des Messfluids aus der Düse 11, von der Geschwindigkeit des Bandes 12 und von der Spannung des Bandes 12 kann der Anpressdruck der Messköpfe 10, 20 und 30 eingestellt werden. Um eine fehlerfreie Permeabilitätsmessung zu gewährleisten, ist darauf zu achten, dass der Anpressdruck mindestens dem Düsenaustrittsdruck entspricht.

### Bezugszeichenliste

- 10: Messkopf
- 11: Düse
- 12: Band
- 13: Pfeil
- 14: Pfeil
- 20: Messkopf
- 21: Kontaktfläche
- 30: Messkopf
- 31: Rolle
- 32: Verbindungselement
- 33: Rahmen

## Patentansprüche

1. Verfahren zur Messung der Permeabilität eines umlaufendes Bandes (12), insbesondere eines Entwässerungsbandes in einer Papiermaschine, mit einer Düse (11), aus der ein Messfluid auf das Band (12) strömt, wobei die Düse (11) mit einem konstanten Anpressdruck (13) auf das umlaufende Band (12) angepresst wird
**dadurch gekennzeichnet,**
**dass** die Düse (11) in einem Messkopf (10, 20, 30) integriert ist, der mit einem bestimmten Anpressdruck (14) gegen das Band (12) anpressbar ist und/oder die Düse (11) innerhalb des Messkopfes (10, 20, 30) unabhängig vom Anpressdruck (14) des Messkopfes (10, 20, 30) zusätzlich gegen das Band (12) angepresst wird.

2. Verfahren nach Anspruch 1,
**dadurch gekennzeichnet,**
**dass** der Anpressdruck (13) in Abhängigkeit vom Austrittsdruck des Messfluids aus der Düse (11) und/oder von der Bandgeschwindigkeit und/oder von der Bandspannung einstellbar ist.

3. Verfahren nach Anspruch 2,
**dadurch gekennzeichnet,**
**dass** der Anpressdruck (13) mindestens dem Düsenaustrittsdruck entspricht.

4. Verfahren nach Anspruch 1,
**dadurch gekennzeichnet,**
**dass** der Messkopf (10, 20, 30) eine auf dem Band (12) anpressbare Kontaktfläche (21) aufweist.

5. Verfahren nach Anspruch 1,
**dadurch gekennzeichnet,**
**dass** der Messkopf (10, 20, 30) als ein Rahmen (33) ausgebildet ist.

6. Verfahren nach Anspruch 5,
**dadurch gekennzeichnet,**
**dass** der Rahmen (33) mit Gleitschuhen und/oder Rollen (31) versehen ist.

7. Verfahren nach einem der Ansprüche 1 oder 4 bis 6,
**dadurch gekennzeichnet,**
**dass** der Messkopf (10, 20, 30) aus einem abriebfesten Material gefertigt ist.

8. Verfahren nach einem der Ansprüche 1 bis 7,
**dadurch gekennzeichnet,**
**dass** die Anpresskraft (13) zur Erzeugung des Anpressdruckes einen Sicherheitsfaktor von 1 bis 20 aufweist.

9. Verfahren nach einem der Ansprüche 1 bis 8,
**dadurch gekennzeichnet,**
**dass** der Anpressdruck (14) des Messkopfes (10) gegen das Band (12) im Bereich von 200 bis 1.500 N/m² liegt.

## Claims

1. Method for measuring the permeability of a circulating belt (12), in particular a dewatering belt in a papermaking machine, comprising a nozzle (11) from which a measuring fluid flows on to the belt (12), the nozzle (11) being pressed on to the circulating belt (12) with a constant contact pressure (13),
**characterized in that**
the nozzle (11) is integrated into a measuring head (10, 20, 30), which can be pressed against the belt (12) with a specific contact pressure (14), and/or the nozzle (11) within the measuring head (10, 20, 30) is additionally pressed against the belt (12) irrespective of the contact pressure (14) of the measuring head (10, 20, 30).

2. Method according to Claim 1,
**characterized in that**
the contact pressure (13) can be set as a function of the outlet pressure of the measuring fluid from the nozzle (11) and/or of the belt speed and/or of the belt tension.

3. Method according to Claim 2,
**characterized in that**
the contact pressure (13) corresponds at least to the nozzle outlet pressure.

4. Method according to Claim 1,
**characterized in that**
the measuring head (10, 20, 30) has a contact face (21) which can be pressed on to the belt (12).

5. Method according to Claim 1,
**characterized in that**
the measuring head (10, 20, 30) is formed as a frame (33).

6. Method according to Claim 5,
**characterized in that**
the frame (33) is provided with sliding shoes and/or rollers (31).

7. Method according to one of Claims 1 or 4 to 6,
**characterized in that**
the measuring head (10, 20, 30) is made of an abrasion-resistant material.

8. Method according to one of Claims 1 to 7,
**characterized in that**
the contact force (13) for generating the contact pressure has a safety factor of 1 to 20.

9. Method according to one of Claims 1 to 8,
**characterized in that**
the contact pressure (14) of the measuring head (10, 20, 30) against the belt (12) lies in the range from 200 to 1500 N/m².

## Revendications

1. Procédé de mesure de la perméabilité d'une bande défilant en continu (12), en particulier d'une bande d'égouttage dans une machine à papier, comprenant une buse (11) depuis laquelle un fluide de mesure s'écoule sur la bande (12), la buse (11) étant pressée avec une pression d'application constante (13) sur la bande défilant en continu (12),
**caractérisé en ce que**
la buse (11) est intégrée dans une tête de mesure (10, 20, 30) qui peut être pressée avec une pression d'application déterminée (14) contre la bande (12) et/ou la buse (11) est pressée en outre contre la bande (12) à l'intérieur de la tête de mesure (10, 20, 30) indépendamment de la pression d'application (14) de la tête de mesure (10, 20, 30) .

2. Procédé selon la revendication 1,
**caractérisé en ce que**
la pression d'application (13) peut être ajustée en fonction de la pression de sortie du fluide de mesure hors de la buse (11) et/ou de la vitesse de la bande et/ou de la tension de la bande.

3. Procédé selon la revendication 2,
**caractérisé en ce que**
la pression d'application (13) correspond au moins à la pression de sortie de la buse.

4. Procédé selon la revendication 1,
**caractérisé en ce que**
la tête de mesure (10, 20, 30) présente une surface de contact (21) pouvant être pressée sur la bande (12).

5. Procédé selon la revendication 1,
**caractérisé en ce que**
la tête de mesure (10, 20, 30) est réalisée sous forme de cadre (33).

6. Procédé selon la revendication 5,
**caractérisé en ce que**
le cadre (33) est pourvu de patins et/ou de rouleaux (31).

7. Procédé selon l'une quelconque des revendications 1 ou 4 à 6,
**caractérisé en ce que**
la tête de mesure (10, 20, 30) est fabriquée en un matériau résistant à l'abrasion.

8. Procédé selon l'une quelconque des revendications 1 à 7,
**caractérisé en ce que**
la force d'application (13) pour générer la pression d'application présente un facteur de sécurité de 1 à 20.

9. Procédé selon l'une quelconque des revendications 1 à 8,
**caractérisé en ce que**
la pression d'application (14) de la tête de mesure (10) contre la bande (12) est située dans une plage de 200 à 1500 N/m².
